# EUROPÄISCHE PATENTANMELDUNG

(11) **EP 0 742 247 A2**
(43) Veröffentlichungstag der Anmeldung: **13.11.1996**
(21) Anmeldenummer: 96106719.6
(22) Anmeldetag: 29.04.1996
(51) Int. Cl.: C08J 5/18, C08L 33/08

(54) **Verwendung von kautschukartigen Copolymerisaten aus Basis von Alkylacrylaten und Acrylnitril zur Herstellung von flexiblen Folien**

(30) Priorität: 11.05.1995 DE 19517188
(71) Anmelder: BAYER AG, 51368 Leverkusen (DE)
(72) Erfinder: Wunderlich, Hans, Dr., 51373 Leverkusen (DE); Braese, Hans-Eberhard, 50765 Köln (DE); Trimbach, Jürgen, 50859 Köln (DE)

(57) **Zusammenfassung**

Teilchenförmige, teilvernetzte kautschukartige Copolymerisate auf Basis von Alkylacrylaten und Acrylnitril können zur Herstellung von flexiblen Folien, insbesondere solche mit lederartigem Aussehen, verwendet werden.

## Beschreibung

Die Erfindung betrifft die Verwendung von teilchenförmigen, teilvernetzten kautschukartigen Copolymerisaten auf Basis von Alkylacrylaten und Acrylnitril zur Herstellung von flexiblen Folien, insbesondere solchen mit lederartigem Aussehen.

Kunststoff-Folien mit lederartigem Aussehen werden beispielsweise zur Innenverkleidung von Kraftfahrzeugen verwendet. Sie werden meist durch Kalandrieren einer Rohfolie und anschließendes Tiefziehen hergestellt. Als Kunststoff verwendet man meist Polyvinylchlorid im Gemisch mit verschiedenen Vinylpolymerisaten und Weichmachern. Diese Folien sind bei hohen Temperaturen nicht vollständig alterungsstabil, enthalten flüchtige, zur Migration neigende Komponenten sowie Halogen. Diese Nachteile sind überwiegend auf den Bestandteil Polyvinylchlorid zurückzuführen.

Zur Verbesserung der Folieneigenschaften sind bereits Polymerisatmischungen ohne Polyvinylchlorid als Rohstoffe eingesetzt worden, die neben elastomerbepfropfte Styrol-Acrylnitril-Copolymerisate (z.B. ASA) noch Acrylnitril-Acrylesterkautschuke (NAR) und Styrol-Acrylnitril-Copolymere (SAN) enthalten. Solche Polymerisatmischungen zur Herstellung von flexiblen Folien sind z.B. aus DE-A 38 11 899 bekannt. Die Eigenschaften dieser, üblicherweise als ASA-Polymerisatmischungen bezeichneten Legierungen sind durch den Zusatz von monomeren, oligomeren und polymeren Weichmachern sowie polymerer Modifikatoren in bestimmten Grenzen variierbar. Es zeigte sich jedoch, daß bei höheren Anteilen von flüssigen, monomeren oder oligomeren Weichmachern in den ASA-Polymerisatmischungen Probleme durch Migration auftreten und bei höheren Anteilen an polymeren Weichmachern die Verarbeitungsgeschwindigkeit durch Kleben der Masse an den heißen Verarbeitungsaggregaten vermindert wird. Weiterhin werden bei hohen Anteilen an den genannten Weichmachern die Warmformeigenschaften, das Narbbild, die gleichmäßige Wanddickenverteilung der Folien nach dem Warmformprozeß und die Schmelzeviskosität der Mischung ungünstig beeinflußt. Die bekannten Folien auf Basis von ASA-Polymerisatmischungen sind daher nur soweit modifizierbar, daß Shore-Härten D von 35 bis 45 (= Shore-Härten A von 90 bis 95) erreicht werden. Für viele Anwendungen werden aber Shore-Härten A von 70 bis 85 gefordert, um einen angenehmeren Griff der Folien zu erhalten.

Es wurde nun überraschend gefunden, daß man flexible Folien mit den geforderten Eigenschaften durch die Verwendung von teilchenförmigen, teilvernetzten kautschukartigen Copolymerisaten auf Basis von Alkylacrylaten und Acrylnitril erhalten kann.

Gegenstand der vorliegenden Erfindung ist deshalb die Verwendung von teilchenförmigen, teilvernetzten kautschukartigen Copolymerisaten auf Basis von 50 bis 95, bevorzugt 60 bis 80 Gew.-% C₂-C₈-Alkylacrylaten und 5 bis 50, bevorzugt 40 bis 20 Gew.-% Acrylnitril mit mittlerem Teilchendurchmesser (d₅₀) von 0,08 bis 1,0 µm, bevorzugt 0,1 bis 0,8 µm, einem Quellungsindex >10, gemessen in Dimethylformamid bei 23°C, und Gelgehalten von 20 bis 99 Gew.-%, bevorzugt 40 bis 80 Gew.-%, zur Herstellung von flexiblen Folien.

Als C₂-C₈-Alkylacrylate werden insbesondere genannt: Butylacrylat, Methylmethacrylat, Pentyl-, Hexyl-, 2-Ethylhexylacrylat, insbesondere Butylacrylat.

Die Alkylacrylate können bis zu 5, bevorzugt 0,05 bis 15 Gew.-%, insbesondere 0,1 bis 10 Gew.-%, bezogen auf den Gesamtgehalt an Alkylacrylaten, an Butadien enthalten. Weiterhin kann das Acrylnitril zum Teil (2 bis 60, bevorzugt 5 bis 10 Gew.-%), bezogen auf den Gesamtacrylnitrilgehalt, durch Styrol, α-Methylstyrol und/oder C₁-C₄-Alkylmethacrylate, wie Methylmethacrylat, ersetzt werden.

Solche kautschukartigen Copolymerisate auf Basis von Alkylacrylaten und Acrylnitril sind bekannt und können durch radikalische Emulsionspolymerisation bei Temperaturen >30°C hergestellt werden. Zur Einstellung der Teilvernetzung müssen besondere Bedingungen eingehalten werden. Verlangt ist eine Vernetzung (ausgedrückt durch den Gelgehalt) mit relativ geringer Vernetzungsdichte (ausgedrückt durch den Quellungsindex). Diese Eigenschaftskombination erhält man z.B., wenn man bei der Emulsionspolymerisation bis zu 1 Gew.-% polyfunktioneller, copolymerisierbarer Allylverbindungen mitverwendet, insbesondere Triallylverbindungen, wie Triallylisocyanurate. Es wird in diesem Zusammenhang auf DE-A 39 22 103 (US 5 112 910) verwiesen sowie auf die obengenannte DE-A 38 11 899.

Selbstverständlich ist es möglich die genannten Copolymerisate auf Basis von Alkylacrylaten und Acrylnitril noch mit anderen Elastomeren bzw. Polymeren abzumischen, um z.B. die Verarbeitungseigenschaften zu optimieren.

Es ist z.B. möglich die erfindungsgemäß verwendeten Copolymerisate auf Basis von Alkylacrylaten und Acrylnitril mit anderen Elastomeren bzw. Thermoplasten abzumischen. Beispielsweise können die erfindungsgemäß verwendeten Copolymerisate abgemischt werden mit Styrol-Acrylnitril-Copolymeren, wie sie z.B. in R. Vieweg, Kunststoff-Handbuch, Band 5, Carl Hauser Verlag (1969) München sowie Ullmann's Encyclopedia of Industrial Chemistry, Vol. A 21, VCH Verlagsgesellschaft, Weinheim (1992) beschrieben sind. Zur Verbesserung der Rieselfähigkeit hat sich eine Mischung aus 80 bis 98 Gew.-% an teilchenförmigen, teilvernetzten kautschukartigen Copolymerisaten auf Basis von C₂-C₈-Alkylacrylaten und Acrylnitril und 20 bis 2 Gew.-% Styrol-Acrylnitril-Copolymeren als vorteilhaft erwiesen.

Um die Rieselfähigkeit und damit die Verarbeitbarkeit der Copolymerisate auf Basis von Alkylacrylaten und Acrylnitril zu verbessern, ist es selbstverständlich auch möglich, die erfindungsgemäß zu verwendenden Copolymerisate noch mit organischen Trennmitteln, wie z.B. wachsartigen Estern oder Amiden, anorganischen Pudermitteln, wie Kieselsäure, Kreide, Talkum oder Salzen höherer Carbonsäuren, wie Calciumstearat abzumischen. Die Menge an den genannten Additiven kann bis zu 30 Gew.-%, bevorzugt 0,2 bis 10 Gew.-%, bezogen auf den Gehalt an Copolymerisat aus Alkylacrylaten und Acrylnitril, betragen. Die erfindungsgemäß zu verwendenden Copolymerisate können weiterhin noch abgemischt werden mit Styrol-Acrylnitril-Copolymerisaten, Acrylnitril-Butadien-Styrol-Pfropfcopolymerisaten, Acrylnitril-Styrol-Alkylacrylatcopolymeren, Polyurethanen, kautschukartigen Acrylnitril-Butadien-Copolymeren, Ethylenalkylacrylat-Copolymeren, Ethylen-Vinylacetat-Copolymerisaten, Ethylen-Vinylacetat-Kohlenmonoxid Terpolymerisaten und Polycaprolactonen, bevorzugt Styrol-Acrylnitril-Copolymeren. Aufgrund des polaren Charakters der erfindungsgemäßen Copolymerisate können auch Abmischen mit PVC hergestellt werden. Die Elastizität von PVC-Mischungen werden durch Zusatz von NAR verbessert, ohne daß die Licht- und Wärmealterungsbeständigkeit beeinträchtigt wird.

Die Menge dieser Zusätze kann leicht durch übliche Vorversuche ermittelt werden und richtet sich nach dem jeweiligen Einsatzzweck der Folien und deren gefordertes Eigenschaftsbild. Übliche Mengen an zuzumischenden Polymeren sind 2 bis 30 Gew.-%.

Die Weichheit der erfindungsgemäß zu verwendenden Copolymerisate kann durch den Zusatz von monomeren, oligomeren oder polymeren Weichmachern in gewünschter Weise modifiziert werden, wobei die Weichmacher, bezogen auf ihren gewichtsmäßigen Anteil, verglichen mit den bekannten ASA-Polymerisatmischungen, eine höhere Effektivität besitzen. Dies führt dazu, daß der geforderte Härtebereich der Folien von Shore-Härte A 70 bis 85 leicht eingestellt werden kann, ohne das die bisher beobachteten Nachteile wie Migration, zu niedrige Schmelzeviskosität, Beeinträchtigung des Narbbildes und ungleichmäßige Wanddickenverteilung beim Thermoformen eintreten.

Als Weichmacher können die üblichen monomeren, oligomeren und polymeren Weichmacher sowie Weichmachergemische eingesetzt werden, wie z.B. Ethylen-Vinylacetate, Adipate, Trimellitate, Phthalate und Phosphate. Die Menge an Weichmacher beträgt üblicherweise 3 bis 40 Gew.-%, bevorzugt 5 bis 25 Gew.-%, bezogen auf 100 Teile Polymer.

Die Herstellung der Folien aus den erfindungsgemäß einzusetzenden Copolymerisaten kann in üblicher Weise durch Kalandrieren, Extrudieren oder Warmformen durchgeführt werden. Die aus den erfindungsgemäß zu verwendenden Copolymerisaten hergestellten Folien können nach den üblichen Verfahren mit reaktiven Polyurethansystemen hinterschäumt oder nach Aufbringen von Klebeschichten auf der Rückseite mit geeigneten Schaumschichten kaschiert werden. Weiterhin ist das Aufbringen von Schutzschichten und Druckdekoren auf der Oberfläche der Folie durch den polaren Charakter der Copolymerisate erleichtert.

Gelgehalte und Quellungsindices wurden, wenn nicht anders angegeben, in Dimethylformamid bei 23°C ermittelt (vgl. M. Hoffmann et al., Polymeranalytik II, Georg Thieme Verlag, Stuttgart, 1977). Die Teilchendurchmesser stellen mittlere Teilchendurchmesser d₅₀ dar (siehe dazu "Ultrazentrifugenmessung", W. Scholtan et al., Kolloid z. und Z. Polymere 250 (1972) Seite 783-796).

### Beispiele

### Herstellung und Eigenschaften der Polymerisatmischungen

Die nachfolgende Auflistung gibt einen Überblick über die in den Beispielen eingesetzten Polymere und Modifikatoren:

Der in den Beispielen aufgeführte Acrylnitril-Acrylesterkautschuk (NAR) wurde, wie in der DE-A 39 22 103 beschrieben, aus 30 % Acrylnitril und 70 % Butylacrylat hergestellt. Meist wurde eine wäßrige Emulsion von SAH zugemischt, um die Rieselfähigkeit von NAR zu verbessern.

Masse-SAN: nach dem Masse-Polymerisationsverfahren hergestelltes Styrol-Acrylnitril-Copolymer aus 28 % Acrylnitril und 72 % Styrol.
- EVA:: Ethylen-Vinylacetat-Copolymer mit 63 % Vinylacetat.
- ASA-Copolymerisat:: Styrol-Acrylnitril-Acrylat-Copolymerisat mit 60 % Butylacrylat.
- ASA-Polymermischung:: Styrol-Acrylnitril-Acrylat-Copolymerisat-haltige Mischung mit 54 % Butylacrylat.

### Ausführung

Die im Rahmen dieser Erfindung hergestellten Polymerlegierungen wurden zunächst 10 min bei 170-185°C auf einer Mischwalze plastifiziert und anschließend zu Preßplatten (Maße 200 x 200 x 1 mm) verarbeitet. Zur Herstellung der Preßplatten wurden Temperaturen zwischen 180 und 195°C (jeweils 10°C über Walzentemperatur) eingestellt.

Die Eigenschaften der Prüfkörper sind in der Tabelle 2 aufgelistet.

**Tabelle 1**

| Beispiel-Nr. | | | | | | | |
|---|---|---|---|---|---|---|---|
| Komponente | 1 | 2 | 3 | 4 | 5 | 6 | 7* |
| NAR | 100 | | | | | | |
| NAR (5 % SAN) | - | 100 | - | - | 80 | 70 | - |
| NAR (7,5 % SAN) | - | - | 100 | - | - | - | - |
| NAR (10 % SAN) | - | - | - | 100 | - | - | - |
| Masse-SAN | - | - | - | - | 20 | 30 | - |
| ASA-Polymermischung | - | - | - | - | - | - | 100 |
| Äußeres Gleitmittel (Loxiol G 70, Fa. Henkel) | 0,3 | 0,3 | 0,3 | 0,3 | 0,3 | 0,3 | 0,3 |

| | | | | | | | |
|---|---|---|---|---|---|---|---|
| * Vergleich | | | | | | | |

**Tabelle 2**

| Beispiel-Nr. | | | | | | | |
|---|---|---|---|---|---|---|---|
| Prüfmethode | 1 | 2 | 3 | 4 | 5 | 6 | 7* |
| Bruchdehnung (%), DIN 53 455 | 322 | 311 | 305 | 294 | 240 | 209 | 196 |
| Zugfestigkeit (MPa), DIN 53 455 | 14 | 15 | 15 | 17 | 18 | 21 | 19 |
| Shore-Härte D s, DIN 53 505 | 29 | 30 | 32 | 33 | 43 | 49 | 43 |

### Warmverformversuche

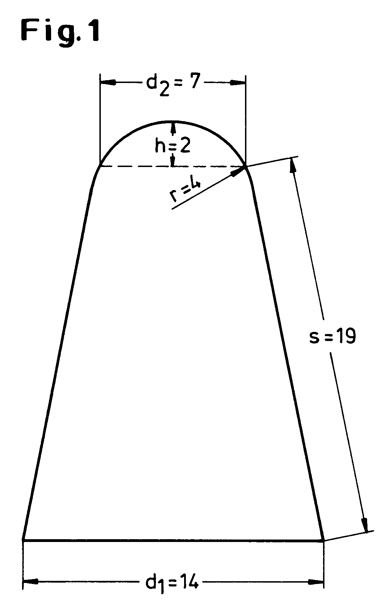

Die auf einer Mischwalze hergestellten Folien (Länge 300 mm, Breite 300 mm, Dicke 1 mm) werden in eine Tiefziehapparatur eingespannt und auf 160, 175 und 190°C erhitzt (Bestimmung der Oberflächentemperaturen mit Schmelzsalzen). Ein Kegelstumpf gemäß Fig. 1 wird unter Anlegen eines Vakuums 21 cm tief in die Folie gedrückt. Auch bei der mit 160°C relativ tiefen Temperatur blieb bei den Beispielen 1 bis 6 in allen Fällen die Folie intakt. Bei dem Vergleichsbeispiel kam es bei 160°C zum Aufriß der Folie.

In der Tabelle 3 sind Beispiele aufgeführt, die die Modifizierbarkeit der erfindungsgemäßen Polymerisatmischung mit Weichmachern und Modifikatoren belegen. Gegenüber dem Vergleichsbeispiel zeigt sich eine höhere Effektivität der verwendeten Weichmacher drch eine deutlich verminderte Shore-Härte.

Beispiel 14 belegt die Verträglichkeit mit PVC. Im Gegensatz zu Acrylnitril-Butadien-Kautschuken wird mit NAR die Licht- und Wärmealterungsbeständigkeit der Mischung nicht beeinträchtigt.

**Tabelle 3**

| Beispiel Nr. | | | | | | | |
|---|---|---|---|---|---|---|---|
| Komponente | 8 | 9 | 10 | 11 | 12 | 13* | 14 |
| NAR (5 % SAN) | 80 | 70 | 60 | 40 | 10 | - | 30 |
| Masse-SAN | 20 | 30 | 20 | 15 | 20 | - | - |
| Ethylen-Vinylacetat-Copolymer | - | - | 20 | - | 20 | - | - |
| Trimellitsäureester | 5 | 5 | 5 | 5 | 5 | 5 | - |
| Phthalsäuredioctylester | - | - | - | - | - | - | 30 |
| ASA-Copolymerisat | - | - | - | 45 | 50 | - | - |
| ASA-Polymermischung | - | - | - | - | - | 100 | - |
| S-PVC-K-Wert 70 | - | - | - | - | - | - | 100 |
| Äußeres Gleitmittel (Loxiol G 70 der Fa. Henkel) | 0,3 | 0,3 | 0,3 | 0,3 | 0,3 | 0,3 | 0,3 |
| Stabilisator Bärostab UBZ 770 der Fa. Bärlocher | - | - | - | - | - | - | 3,0 |

**Tabelle 4**

| Beispiel-Nr. | | | | | | | |
|---|---|---|---|---|---|---|---|
| Prüfmethode | 8 | 9 | 10 | 11 | 12 | 13* | 14 |
| Bruchdehnung (%), DIN 53 455 | 292 | 255 | 305 | 170 | 105 | 250 | 298 |
| Zugfestigkeit (MPa), DIN 53 455 | 16 | 18 | 13 | 20 | 16 | 17 | 22 |
| Shore-Härte D, 15 s, DIN 53 505 | 32 | 36 | - | 41 | 45 | 37 | 49 |
| Shore-Härte A, 15 s, DIN 53 505 | - | - | 72 | - | - | - | - |

### Warmformversuche

Die auf einer Mischwalze hergestellten Folien (Länge 300 mm, Breite 300 mm, Dicke 1 mm) werden in eine Tiefziehapparatur eingespannt und auf 160, 175 und 190°C erhitzt (Bestimmung der Oberflächentemperaturen mit Schmelzsalzen). Ein Kegelstumpf (s. Beispiele 1-7) wird unter Anlegen eines Vakuums 21 cm tief in die Folie gedrückt. Auch bei 160°C blieb in allen Fällen die Folie intakt.

## Patentansprüche

1. Verwendung von teilchenförmigen, teilvernetzten kautschukartigen Copolymerisaten auf Basis von 50 bis 95 Gew.-% C₂-C₈-Alkylacrylaten und 5 bis 50 Gew.-% Acrylnitril mit mittlerem Teilchendurchmesser (d₅₀) von 0,08 bis 1,0 µm, einem Quellungsindex >10 und Gelgehalten von 20 bis 99 Gew.-% zur Herstellung von flexiblen Folien.

2. Verwendung von teilchenförmigen, teilvernetzten kautschukartigen Copolymerisaten gemäß Anspruch 1, dadurch gekennzeichnet, daß die Alkylacrylate 0,05 bis 15 Gew.-%, bezogen auf den Gesamtgehalt an Alkylacrylaten, an Butadien enthalten und das Acrylnitril durch 2 bis 60 Gew.-%, bezogen auf den Gesamtacrylnitrilgehalt, Stryrol, α-Methylstyrol und/oder C₁-C₄-Alkylmethacrylate ersetzt ist.

3. Verwendung der teilchenförmigen, teilvernetzten kautschukartigen Copolymerisate nach Anspruch 1, dadurch gekennzeichnet, daß die teilchenförmigen, teilvernetzten kautschukartigen Copolymerisate mit 2 bis 30 Gew.-% Styrol-Acrylnitril-Copolymeren abgemischt sind.
